# EUROPÄISCHE PATENTSCHRIFT

(11) **EP 3 504 780 B1**
(45) Veröffentlichungstag und Bekanntmachung des Hinweises auf die Patenterteilung: **17.06.2020**
(21) Anmeldenummer: 17791590.7
(22) Anmeldetag: 09.10.2017
(51) Int. Cl.: H02K 3/28, H02K 55/00, H02K 3/47

(54) **HELIXARTIGE WICKLUNG MIT HOMOGENERER FELDAUSNUTZUNG**
HELICAL WINDING WITH MORE HOMOGENEOUS FIELD UTILISATION
ENROULEMENT HÉLICOÏDAL À UTILISATION HOMOGÈNE DU CHAMP

(30) Priorität: 14.10.2016 DE 102016220040
(43) Veröffentlichungstag der Anmeldung: 03.07.2019
(73) Patentinhaber: Rolls-Royce Deutschland Ltd & Co KG, 15827 Blankenfelde-Mahlow (DE)
(72) Erfinder: FRANK, Michael, 91080 Uttenreuth (DE); GRUNDMANN, Jörn, 91091 Großenseebach (DE); HERRANZ GRACIA, Mercedes, 91301 Forchheim (DE); NICK, Wolfgang, 90419 Nürnberg (DE)
(86) Internationale Anmeldenummer: PCT/EP2017/075591
(87) Internationale Veröffentlichungsnummer: WO 2018/069203

(56) Entgegenhaltungen:
- JP-A- S5 746 641
- JP-A- S60 170 448
- US-A- 3 761 752

## Beschreibung

Die vorliegende Erfindung betrifft einen Stator für eine elektrische Wechselstrommaschine mit einer magnetischen Polzahl p, wobei der Stator eine Statorwicklung mit einer Mehrzahl von Leiterwindungen aufweist, welche jeweils zumindest in einem Teilabschnitt helixartig verlaufen. Weiterhin betrifft die Erfindung eine elektrische Maschine mit einem solchen Stator.

Es sind Statorwicklungen bekannt, bei denen die Leiterwindungen bezüglich einer zentralen Achse des Stators helixartig angeordnet sind. Solche Wicklungen werden als helixartige Wicklungen oder auch als Schrägwicklungen bezeichnet. Die Verwendung eines solchen Wicklungstyps ist vor allem zur Erzielung einer besonders hohen Leistungsdichte einer elektrischen Maschine vorteilhaft, wie sie beispielsweise für die Anwendung in Antrieben von Fahrzeugen benötigt wird. Gerade bei der Anwendung in Luftfahrzeugen ist das Erreichen einer hohen Leistungsdichte ein vorrangiges Entwicklungsziel. Besonders vorteilhaft im Hinblick auf eine hohe Leistungsdichte ist die Verwendung einer helixartigen Statorwicklung in Verbindung mit einem supraleitenden Rotor. Eine derartig aufgebaute Maschine wird beispielsweise in "Air-core armature shape: A comparison of helical and straight-with-end-turns windings" von James L. Kirtley, Electric Machines and Power Systems, 23:263-278, 1995 beschrieben.

Die Statorwicklungen von klassischen elektrischen Maschinen sind meist als gerade Wicklungen aufgebaut, in denen sich die für die elektrische Induktion wirksamen Leiterzweige parallel zur zentralen Achse der Maschine erstrecken. Diese geraden Abschnitte werden dann in ihren axialen Endbereichen durch sogenannte Wickelköpfe verbunden, wobei durch die Wickelköpfe die geraden Abschnitte der einzelnen Windungen in Umfangsrichtung überbrückt werden. Nachteilig bei einer solchen klassischen Geometrie ist, dass diese Wickelköpfe einerseits einen hohen Gewichtsbeitrag zum Gesamtgewicht des Stators leisten und andererseits schwer zu kühlen und auch schwer zu fertigen sind. Die Wickelköpfe haben auch einen hohen Platzbedarf, was das Bauvolumen der elektrischen Maschine insgesamt vergrößert. Um eine Maschine mit hoher Leistungsdichte zu erreichen ist es daher allgemein vorteilhaft, die Wickelköpfe möglichst klein zu gestalten oder idealerweise ganz auf sie zu verzichten. Dies wird durch die Verwendung einer helixartigen Wicklung erreicht, wie sie beispielsweise in der oben zitierten Veröffentlichung beschrieben wird. Die dort beschriebene Statorwicklung weist zwei radial ineinander liegende Wicklungslagen auf, wobei sich der Drehsinn der helixartigen Windungen in der inneren und der äußeren Wicklungslage unterscheidet. Durch die Verbindung der einzelnen inneren und äußeren Leiterabschnitte werden übergeordnete, zusammenhängende Leiterschleifen erhalten, in denen eine elektrische Induktion erfolgen kann. Auf klassische Wickelköpfe kann vollständig verzichtet werden, wenn - wie in der Veröffentlichung beschrieben - die zu verbindenden oberen und unteren Leiterabschnitte in den axialen Endbereichen jeweils an denselben Umfangspositionen aufeinandertreffen. Dann wird durch die in den Endbereichen vorgesehenen Verbindungsstücke nur der radiale Abstand zwischen Oberlage und Unterlage überbrückt. Die Verbindungsstücke können also extrem kurz und damit platz- und gewichtssparend ausgeführt werden. Ein klassischer Wickelkopf mit einer räumlichen Ausdehnung in Umfangsrichtung wird nicht benötigt. Die beschriebene Statorwicklung ist in drei separate Stränge aufgeteilt, wobei jeder Strang einer Phase zugeordnet ist, so dass die elektrische Maschine mit klassischem Dreiphasen-Wechselstrom betreibbar ist.

In der US 3,761,752 ist eine mehrphasige stationäre Wicklung für eine dynamoelektrische Wechselstrommaschine offenbart, bei der die Leiter der Wicklung helixartig auf einer Trägerstruktur angeordnet sind.

Ein Nachteil der beschriebenen helixartigen Statorwicklung ist jedoch, dass die Feldausnutzung geringer ist als die Feldausnutzung einer klassischen elektrischen Maschine mit einer geraden, im Wesentlichen axial verlaufenden Statorwicklung. Vor allem in den axialen Endbereichen ist die Feldausnutzung einer herkömmlichen helixartigen Statorwicklung besonders niedrig.

Aufgabe der Erfindung ist es daher, einen Stator mit einer helixartigen Wicklung anzugeben, welcher die genannten Nachteile überwindet. Insbesondere soll ein Stator zur Verfügung gestellt werden, bei welchem die Feldausnutzung im Vergleich zu bekannten helixartigen Wicklungen homogener ist und/oder erhöht ist. Eine weitere Aufgabe ist es, eine elektrische Maschine mit einem derartig verbesserten Stator anzugeben.

Diese Aufgaben werden durch den in Anspruch 1 beschriebenen Stator und die in Anspruch 10 beschriebene elektrische Maschine gelöst.

Der erfindungsgemäße Stator ist für eine elektrische Wechselstrom-Maschine mit einer magnetischen Polzahl p ausgelegt und weist eine zentrale Achse A auf. Der Stator weist eine Statorwicklung mit einer Mehrzahl von Leiterwindungen auf, welche zu insgesamt n elektrischen Strängen gruppiert sind, wobei die Leiterwindungen eines Stranges jeweils wenigstens einen ersten und einen zweiten Leiterzweig aufweisen. Diese Leiterzweige sind auf dem überwiegenden Teil ihrer Länge helixartig um die zentrale Achse A angeordnet. Diese helixartigen Leiterzweige weisen jeweils eine Ganghöhe h auf, die größer ist als das Produkt der axialen Länge l der helixartigen Leiterzweige und der Polzahl p.

Der Stator ist also zur Induktion von Spannungen in einem p-poligen Magnetfeld ausgelegt. Hierzu kann die Anordnung der Statorwicklungen insbesondere eine im Wesentlichen p/2-zählige Rotationssymmetrie bezüglich einer zentralen Achse des Stators aufweisen.

Die helixartigen Leiterzweige verlaufen schräg zu der zentralen Achse des Stators. Es handelt sich also mit anderen Worten um eine helixartige Wicklung, die im deutschen auch Schrägwicklung genannt wird. Die einzelnen Windungen liegen dabei insbesondere auf einer oder mehreren gemeinsamen Zylindermantelflächen, deren Zylinderachse wiederum die zentrale Achse des Stators ist. Die verschiedenen Leiterzweige können dabei über mehrere ineinander geschachtelte Zylindermantelflächen verteilt sein. In den helixartigen Abschnitten weisen die Leiterwindungen also insbesondere keine radiale Komponente auf.
Die einzelnen Stränge sind so ausgestaltet, dass jeder Strang einer elektrischen Phase zugeordnet ist. Mit anderen Worten kann in den ihnen zugeordneten Leiterwindungen ein gegenüber den anderen Strängen phasenverschobener Wechselstrom fließen.

Für die erfindungsgemäße Ausgestaltung ist es ausreichend, wenn die Leiterwindungen auf einem überwiegenden Teil ihrer Länge helixartig verlaufen. Dies kann insbesondere ein für alle Windungen gemeinsamer axialer Abschnitt des Stators sein. Dies kann insbesondere ein axial innenliegender Abschnitt sein. Es soll also nicht ausgeschlossen sein, dass der Verlauf der Leiterwindungen in bestimmten Teilbereichen, vor allem den axialen Endbereichen, eine andere als die helixartige Form aufweist. In dem helixartig ausgebildeten Längenabschnitt der Statorwicklung können einzelne Leiterzweige der jeweiligen Stränge nebeneinander - also in Umfangsrichtung um einen bestimmten Winkel versetzt - auf einer gemeinsamen Zylindermantelfläche angeordnet sein. Sie können insbesondere gleichmäßig auf dieser Zylindermantelfläche verteilt sein, so dass sich eine mehrgängige Helix ergibt.

Die ersten und zweiten Leiterzweige einer gegebenen Leiterwindung können insbesondere jeweils eine unterschiedliche axiale Richtungskomponente des Stromflusses aufweisen. Auf diese Weise kann aus zwei oder mehr solchen Leiterzweigen eine Leiterwindung einer Spule mit ringförmigem Stromfluss gebildet werden.

Im vorliegenden Zusammenhang soll unter der genannten Ganghöhe einer Helix gemäß der üblichen geometrischen Definition die axiale Länge verstanden werden, die für eine volle Umdrehung der Helix benötigt wird.

Die genannte axiale Länge l ist die effektive Länge der helixartigen Statorwicklung, also die Länge des Bereichs der Wicklung, auf dem die Leiterzweige helixartig geführt sind. Bei einem im Wesentlichen komplett helixartigen Verlauf der Wicklung ist l also mit anderen Worten die axiale Länge der Wicklung abzüglich der Länge der Endbereiche, die zur Verbindung der Leiterzweige benötigt werden.

Ein wesentlicher Vorteil der erfindungsgemäßen Ausgestaltung liegt darin, dass die Ganghöhe größer ist als das Produkt der axialen Länge l und der Polzahl p. Wenn die Ganghöhe h genau dem Produkt l^{∗}p entspräche, dann könnte die Statorwicklung so ausgelegt sein, dass die miteinander zu verbindenden Leiterzweige in Umfangsrichtung genau aufeinandertreffen. In einem solchen Fall müsste keine Lücke in Umfangsrichtung überbrückt werden. Diese Ausführung ohne Versatz in Umfangsrichtung wurde daher bei herkömmlichen Spiralwicklungen realisiert. Wenn die Ganghöhe größer ist als das Produkt der axialen Länge l und der Polzahl p gilt allgemein, dass der elektrische Schrägungswinkel γ kleiner ist als 180°, wie weiter unten im Zusammenhang mit den Ausführungsbeispielen deutlich wird.

Beim Stator gemäß der vorliegenden Erfindung soll die Ganghöhe aber größer sein als das Produkt l ^{∗} p. Hierbei ist die Schrägung der einzelnen Leiterzweige gegen die zentrale Achse A also geringer als bei der herkömmlichen Ausführung, und die zur Verbindung der einzelnen helixartigen Leiterzweige vorgesehenen Verbindungsleiter können dann zweckmäßig so ausgestaltet werden, dass sie eine Lücke in Umfangsrichtung zwischen den zu verbindenden Leiterzweigen überbrücken können. In diesem Fall können die Verbindungsstücke also sowohl eine radiale Komponente als auch eine Komponente in Umfangsrichtung aufweisen.

Allgemein liegt der Vorteil von einer reduzierten Schrägung der Leiterzweige und einem Versatz zwischen den zu verbindenden Leiterenden darin, dass durch diese Maßnahme die Feldausnutzung der Statorwicklung erhöht wird. Vor allem wird dadurch die Feldausnutzung in den axialen Endbereichen der Statorwicklung erhöht, denn die Fläche zwischen dem Hin- und Rückleiter (also dem ersten und zweiten Leiterzweig) einer gegebenen Statorwindung wird in den Endbereichen größer. Durch die reduzierte Schrägung wird also in den Endbereichen eine Feldausnutzung erreicht, die nicht gegen Null abfällt und insgesamt näher bei der Feldausnutzung einer geraden Statorwicklung liegt. Dabei kommen gleichzeitig die grundlegenden Vorteile der helixartigen Wicklung zum Tragen - also vor allem das Wegfallen aufwendiger und schwer zu kühlender Wicklungsköpfe und die damit verbundene Erhöhung der Leistungsdichte.

Die erfindungsgemäße elektrische Maschine weist einen erfindungsgemäßen Stator auf. Zweckmäßig weist eine solche Maschine zusätzlich einen Rotor zur Erzeugung eines rotierenden magnetischen Felds auf. Die Vorteile der elektrischen Maschine ergeben sich analog zu den beschriebenen Vorteilen des erfindungsgemäßen Stators.

Vorteilhafte Ausgestaltungen und Weiterbildungen der Erfindung gehen aus den von den Ansprüchen 1 und 10 abhängigen Ansprüchen sowie der folgenden Beschreibung hervor. Dabei können die beschriebenen Ausgestaltungen des Stators und der elektrischen Maschine allgemein vorteilhaft miteinander kombiniert werden.

Besonders vorteilhaft weist die Statorwicklung in den axialen Endbereichen elektrisch leitende Verbindungsleiter zwischen den ersten Leiterzweigen und den zweiten Leiterzweigen auf. Diese Verbindungsleiter weisen insbesondere sowohl eine radiale Richtungskomponente als auch eine Richtungskomponente in Umfangsrichtung auf. So kann mithilfe der Verbindungsleiter der in Umfangsrichtung vorliegende Versatz zwischen den helixartigen Leiterzweigen überbrückt werden, und es kann durch die elektrische Verbindung zwischen den Leiterzweigen eine Statorwicklung mit wenigstens einer und bevorzugt mehreren schleifenartigen Leiterwindungen geschaffen werden.

In einer besonders bevorzugten Ausführungsform ist der Versatz in Umfangsrichtung zwischen den miteinander zu verbindenden Leiterzweigen so groß, dass in den axialen Endbereichen ein geometrischen Winkelversatz von wenigstens 1°, insbesondere wenigstens 3° überbrückt werden muss. Bei einem derartig großen Versatz kann die Feldausnutzung vor allem in den axialen Endbereichen wirksam erhöht werden.

Bevorzugt kann jede Leiterwindung bezogen auf die Richtung der zentralen Achse einen Hinleiter (den ersten Leiterzweig) und einen Rückleiter (den zweiten Leiterzweig) aufweisen. Diese beiden Leiterzweige können insbesondere mit verschiedenen Windungsrichtungen um die zentrale Achse angeordnet sein. Insbesondere können alle ersten Leiterzweige der einzelnen Windungen untereinander dieselbe Windungsrichtung aufweisen, und entsprechend können alle zweiten Leiterzweige der einzelnen Windungen untereinander dieselbe, den ersten Leiterzweigen entgegengesetzte Windungsrichtung aufweisen. Die Statorwicklung als Ganzes kann dann aus einer Verkettung der helixartigen ersten und zweiten Leiterzweige über den gesamten Umfang des Stators zusammengesetzt sein. Da die Leiterzweige auf einem überwiegenden Teil ihrer axialen Länge helixförmig sind, handelt es sich insgesamt um eine helixförmige Wicklung. Die helixartigen Leiterzweige können wiederum in ihren axialen Endbereichen durch nicht helixartig verlaufende Verbindungsleiter verbunden sein.

Bei den elektrisch leitenden Verbindungsleitern kann es sich grundsätzlich entweder um separate Verbindungsstücke oder um einstückig mit den Leiterzweigen ausgestaltete Leiterabschnitte handeln. Bei einer solchen einstückigen Ausgestaltung ergeben sich die Verbindungsleiter also nur als Leiterabschnitte einer aus einem durchgehenden Leiter gewickelten Wicklung und nicht als nachträglich zwischen die Leiterzweige eingebrachte Verbindungsstücke.

Allgemein können die elektrischen Verbindungsleiter vorteilhaft so ausgestaltet sein, dass sich für jeden Strang zumindest eine übergeordnete Spulenanordnung ergibt. Dabei können mittels der Verbindungsleiter Leiterzweige derselben und/oder benachbarter Spulenwindungen verbunden sein, die somit zu einer übergeordneten Spulenanordnung für jeden Strang verbunden werden. Insbesondere kann bei der beschriebenen Verteilung der ersten und zweiten Leiterzweige auf innere und äußere Mantelflächen pro Verbindungsleiter jeweils ein innerer, erster Leiterzweig mit einem äußeren, zweiten Leiterzweig verbunden sein. Unabhängig von der genauen Positionierung der einzelnen Leiterzweige wird durch die Verbindungsleiter erreicht, dass für jeden Strang eine zusammenhängende übergeordnete Spulenanordnung gebildet wird, die sich insbesondere als Schleife über den ganzen Umfang des Stators erstrecken kann und die dort zur Induktion von Spannungen und/oder zur Ausbildung von Magnetfeldern genutzt werden kann. Für jeden Strang (also jede Phase) umfasst eine solche zusammenhängende Spulenanordnung zumindest einen ersten und einen zweiten Leiterzweig. Bei mehr als zwei Polen kann sie entsprechend mehr miteinander verbundene Paare von Leiterzweigen umfassen, also beispielsweise p Leiterzweige pro Strang (oder ein ganzzahliges Vielfaches von p an Leiterzweigen) bei einer p-poligen Maschine.

Die Statorwicklung kann vorteilhaft eine Anzahl i von Leiterwindungen aufweisen, wobei i wenigstens der Hälfte des Produkts von Polzahl p und Phasenzahl n entspricht. Wenn jede Leiterwindung einen Hin- und einen Rückleiter aufweist, entspricht die Zahl der Leiterzweige dann insgesamt 2i und somit wenigstens p^{∗}n. Insbesondere ergibt sich dann für jeden der n Stränge eine zusammenhängende Schleife aus i=p/2 einzelnen Hinleitern und i=p/2 einzelnen Rückleitern, die sich insgesamt in einem helixartigen Zick-Zack-Muster über den Umfang des Stators erstreckt. Diese einzelnen Zick-Zack-Schleifen der jeweiligen Stränge können dann in Umfangsrichtung nebeneinander auf den Mantelflächen des Stators angeordnet sein. Dabei kann es sich insbesondere um zwei radial ineinander liegende Mantelflächen handeln, wie weiter unten noch ausführlicher erläutert wird. Bei einfacher Zonung liegen zweckmäßig genau i=n^{∗}p/2 Hinleiter und i=n^{∗}p/2 Rückleiter vor. Bei doppelter Zonung sind es dagegen i=n^{∗}p Hinleiter und i=n^{∗}p Rückleiter.

Im Zusammenhang mit der vorliegenden Erfindung soll unter dem Begriff "doppelte Zonung" verstanden werden, dass die Zonenbreite doppelt so groß ist wie bei einer "einfachen Zonung". Dabei stellt die Zonenbreite den Anteil des Umfangs dar, den die Spulenseiten (also hier die Leiterzweige) eines Strangs im Bereich eines elektrischen Polpaares einnehmen. Bei der "einfachen Zonung" sind also die Leiterzweige der jeweiligen Stränge nur halb so breit wie bei der "doppelten Zonung".

Die genannten Leiterwindungen und Leiterzweige sind allgemein nicht auf einzelne Leiter beschränkt. So kann jede Leiterwindung und jeder Leiterzweig optional aus mehreren Teilleitern zusammengesetzt sein. Diese Teilleiter können in Bündeln im Wesentlichen parallel zueinander geführt sein. Es können auch einzelne Teilleiter miteinander verseilt oder nach der Art eines Roebelleiters transponiert sein. Dabei ist es auch möglich, dass mehrere verseilte und/oder transponierte Teilleiter als parallel verlaufendes Bündel nebeneinander innerhalb eines Leiterzweigs geführt sind. Sie können insbesondere in Umfangsrichtung nebeneinander liegen und/oder in radialer Richtung gestapelt sein. Diese Teilleiter können elektrisch entweder in Reihe oder parallel geschaltet sein.

Bei der oben beschriebenen Ausführungsform soll die Zahl i der Leiterwindungen wenigstens dem Produkt von p/2 und n entsprechen. Dabei ist es besonders vorteilhaft, wenn i entweder genau dem Produkt von p/2 und n entspricht oder einem ganzzahligen Vielfachen dieses Produkts entspricht. So kann auf besonders einfache Weise eine Statorwicklung mit p/2-zähliger Rotationssymmetrie und n separaten Strängen gebildet werden.

Die Statorwicklung weist vorteilhaft eine Anzahl i von ersten Leiterzweigen und eine gleiche Anzahl i von zweiten Leiterzweigen auf, wobei i entweder dem Produkt von Polzahl p und Strangzahl n (bei einfacher Zonung) oder der Hälfte von dem genannten Produkt (bei doppelter Zonung) entspricht. Dabei ist die Ganghöhe h der helixartigen Leiterzweige so gewählt, dass die jeweiligen Leiterzweige sich über ihre axiale Länge l helixartig um einen Winkel α drehen, wobei α einen Wert α = 360°/p - 2^{∗}360°/i liegt und kleiner als α = 360°/p ist.

Es ist allgemein vorteilhaft, wenn α bei wenigstens 360°/p - 2^{∗}360°/i liegt, damit die von den Verbindungsleitern zu überbrückende Lücke nicht allzu groß ist und der eingangs beschriebene Vorteil des geringen Platzbedarfs für die Verbindungsleiter im Vergleich zu herkömmlichen Wickelköpfen trotzdem noch realisiert wird. Ganz besonders Vorteilhaft kann der Winkel α im Bereich von etwa 360°/p - 360°/i liegen. Mit anderen Worten ist er im Vergleich zur Konfiguration ohne Versatz in Umfangsrichtung so gewählt, dass sich in jedem der Endbereiche ein Versatz von etwa einer Strangzonen zwischen den zu verbindenden Enden der Leiterzweige ergibt. Bei dem angegebenen Minimalwert des Winkels von 360°/p - 2^{∗}360°/i ergibt sich dagegen ein Versatz von zwei Strangzonenteilungen an jedem axialen Ende der zu verbindenden Leiterzweige. Der Begriff "Strangzonenteilung" wird hier für den Winkelversatz von 360°/i verwendet. Er soll analog zu dem in der Fachwelt üblichen Begriff der "Nutteilung" verstanden werden, welcher sich daraus ergibt, dass die i Leiterzweige auf jedem Zylindermantel in Nuten eines Statorträgers angeordnet sein können. Eine Nutteilung 360°/i ist dann entsprechend der Winkelversatz zwischen zwei solchen in Umfangsrichtung benachbart liegenden Nuten. Bei dem angegebenen vorteilhaften Wert des Winkels von 360°/p - 360°/i muss an jedem axialen Ende nur eine entsprechende Strangzonenteilung durch die Verbindungsleiter überbrückt werden, und die Ausbildung eines zu voluminösen Wickelkopfes wird vorteilhaft vermieden.

Besonders vorteilhaft können einerseits die ersten Leiterzweige der einzelnen Leiterwindungen auf einer gemeinsamen inneren Zylindermantelfläche angeordnet sein und andererseits die zweiten Leiterzweige der einzelnen Leiterwindungen auf einer gemeinsamen äußeren Zylindermantelfläche angeordnet sein. Dabei können die ersten Leiterzweige auf der inneren Zylindermantelfläche insbesondere eine untereinander gemeinsame erste Windungsrichtung aufweisen und die zweiten Leiterzweige auf der äußeren Zylindermantelfläche können eine untereinander gemeinsame, den ersten Leiterzweigen entgegengesetzte Windungsrichtung aufweisen.

Ein wesentlicher Vorteil der Ausführungsformen mit zwei ineinander geschachtelten Zylindermantelflächen ist, dass die helixartige Wicklung so besonders platzsparend ausgeführt werden kann. Durch die Trennung in innere und äußere Zylindermantelfläche entsprechend der axialen Richtung und der Windungsrichtung kann erreicht werden, dass im axial innenliegenden Bereich innerhalb der jeweiligen Zylindermantelfläche Kreuzungen von Leiterzweigen vermieden werden. Auf jeder der beiden Mantelflächen weisen die zugehörigen Leiterzweige dieselbe Windungsrichtung auf. Zweckmäßig weisen sie ebenfalls dieselbe Ganghöhe auf und können daher ohne Überkreuzungen nebeneinander auf derselben Mantelfläche angeordnet werden. Benachbarte Leiterzweige weisen nur einen Winkelversatz, also einen Versatz in Umfangsrichtung des Stators auf.

Die Anzahl n der Stränge der Statorwicklung kann insbesondere bei drei liegen. Dies entspricht einer typischen Strangzahl für eine herkömmliche Dreiphasenwechselstromwicklung.

Im Zusammenhang mit der vorliegenden Erfindung ist es jedoch auch besonders bevorzugt, wenn die Anzahl n der Stränge größer als drei ist. Insbesondere kann sie ein ganzzahliges Vielfaches von drei sein. Der grundlegende Vorteil dieser Ausführungsformen ist, dass die gegenüber der klassischen dreiphasigen Wicklung erhöhte Anzahl von Strängen eine Verbesserung der Feldausnutzung und Verringerung der Oberfelder ermöglicht. Berechnungen zeigen, dass die Feldausnutzung durch eine Erhöhung der Phasenzahl vor allem im axial innenliegenden Bereich erhöht wird. Mit anderen Worten wird die Feldausnutzung im Bereich ihres Maximums verbessert. Im axial innenliegenden Bereich kann auf diese Weise mit einer helixartigen Wicklung eine Feldausnutzung erreicht werden, die in der Nähe der Feldausnutzung einer geraden Wicklung liegt. Die Erhöhung der Feldausnutzung ist vor allem darauf zurückzuführen, dass das Drehfeld im Luftspalt bei Vorliegen von mehr als drei Strängen durch ein Polygon mit entsprechend mehr Ecken ausgebildet wird und sich daher stärker der idealen Kreisform annähert. Bei einer Wicklung mit drei Strängen, die jeweils Hin- und Rückleiter umfassen, wird das Drehfeld beispielsweise durch ein Hexagon aufgebaut. Wenn die Anzahl der Stränge derart erhöht ist, entsteht ein Polygon mit mehr als diesen sechs Zeigern (beispielsweise einem Vielfachen davon). Je größer die Zahl der Ecken ist, umso stärker nähert sich das entstehende Polygon dem idealen Kreis.

Besonders vorteilhaft kann die Strangzahl n Werte von 6, 9 oder 12 aufweisen. Solche kleinen ganzzahligen Vielfachen von drei sind besonders günstig, da hiermit ein symmetrischer Aufbau realisiert werden kann, bei dem jede der drei Phasen einer klassischen Dreiphasen-Wechselstrommaschine in mehrere zueinander phasenverschobene Teilphasen aufgespalten ist.

Die gesamte Feldausnutzung der Statorwicklung - also die über die axiale Länge l der Statorwicklung gemittelte Feldausnutzung - kann also besonders vorteilhaft durch die Kombination der beiden genannten Merkmale erhöht werden: Einerseits führt ein leichter Versatz der Teilleiter in Umfangsrichtung zu einer Verbesserung der Feldausnutzung in den axialen Endbereichen. Andererseits führt die Erhöhung der Strangzahl auf einen Wert größer als drei zu einer Verbesserung der Feldausnutzung im axial innenliegenden Bereich der Wicklung. Durch die Kombination der beiden Maßnahmen, aber auch durch jede der beiden Maßnahmen für sich, kann so die Feldausnutzung einer helixartigen Wicklung im Vergleich zum Stand der Technik erhöht werden. Dabei ist zu betonen, dass jede der beiden Maßnahmen auch für sich alleine wirkt. Insbesondere ist es also auch möglich, dass bei einer helixartigen Statorwicklung ohne Winkelversatz zwischen den zu verbindenden Leiterzweigen eine Erhöhung der Strangzahl auf einen Wert n größer als drei vorgesehen ist, so dass sich die Feldausnutzung vor allem im axial innenliegenden Bereich erhöht.

Allgemein und unabhängig von der genauen Ausführung der helixartigen Statorwicklung kann diese bevorzugt als Luftspaltwicklung ausgeführt sein. Mit anderen Worten ist die Statorwicklung nicht in Nuten eines Eisenkerns oder eines anderen weichmagnetischen Materials eingebettet, sondern sie ist in der Luftspalt-Region der Maschine angeordnet. Die Statorwicklung kann auch bei dieser Ausführungsform in den Nuten einer Trägerstruktur angeordnet sein. Wesentlich ist aber, dass sich zwischen diesen Nuten kein weichmagnetisches Material befindet. Diese Ausführung als Luftspaltwicklung ist besonders vorteilhaft in einer elektrischen Maschine, die einen supraleitenden Rotor aufweist, da dann die Magnetfelder so stark sind, dass es bei einer klassischen Maschine zu einer zu starken Sättigung des weichmagnetischen Statormaterials kommen würde.

Die elektrische Maschine kann vorteilhaft zusätzlich einen Rotor aufweisen, der zur Erzeugung eines Magnetfeldes mit p Polen ausgebildet ist. Im Zusammenspiel mit einem solchen Rotor kommen die beschriebenen Vorteile des erfindungsgemäßen Stators besonders zum Tragen.

Insbesondere kann ein solcher Rotor mit einer supraleitenden Erregerwicklung ausgestattet sein. Eine solche Ausführung ist besonders vorteilhaft, um mit der Maschine eine sehr hohe Leistungsdichte zu erreichen. Dies ist besonders für Generatoren oder Motoren in Fahrzeugen relevant, die beim Antrieb eines solchen Fahrzeuges mit bewegt werden müssen. Ganz besonders kritisch ist die Leistungsdichte bei elektrischen Maschinen in Luftfahrzeugen. Unabhängig von der genauen Anwendung der Maschine kann diese allgemein entweder als Motor und/oder als Generator betrieben werden. Besonders vorteilhaft kann die Maschine als Synchronmaschine ausgebildet sein.

Die elektrische Maschine kann wenigstens einen Umrichter aufweisen, um eine Phasenverschiebung zwischen den in den einzelnen Strängen der Statorwicklung fließenden Strömen zu erzeugen und/oder aufzuheben und/oder auch um eine optimale Phasenverschiebung zwischen Stator- und Rotorfeld einzustellen. Derartige Umrichter können dazu genutzt werden, um beispielsweise den von einem derart ausgestalteten Generator erzeugten höherphasigen Wechselstrom in herkömmlichen Dreiphasen-Wechselstrom oder auch Gleichstrom umzuwandeln. Umgekehrt können derartige Umrichter auch dazu genutzt werden, um herkömmlichen Dreiphasen-Wechselstrom oder Gleichstrom aus einer anderen Stromquelle in höherphasigen Wechselstrom für einen erfindungsgemäßen Motor umzuwandeln. Alternativ zu der beschriebenen Verwendung von Umrichtern ist es aber auch möglich, dass ein erfindungsgemäßer Generator mit mehr als drei Strängen als Stromquelle für den höherphasigen Wechselstrom genutzt wird und dieser beispielsweise ohne dazwischen gelagerte Phasenverschiebung in eine entsprechenden höherphasigen Motor als Verbraucher eingespeist wird. Eine weitere Alternative sind mehrere galvanisch getrennte 3-phasige Systeme, die von einem Generator gespeist werden.

Unabhängig davon, ob Umrichter verwendet werden oder ob der höherphasige Wechselstrom direkt genutzt wird, ist es allgemein vorteilhaft, wenn die Strangzahl ein kleines ganzzahliges Vielfaches von drei ist, wenn also beispielsweise Sechsphasen-, Neunphasen- oder Zwölfphasenwechselstrom erzeugt oder verbraucht wird.

Bei Vorliegen von n Strängen kann die Phasenverschiebung zwischen einzelnen benachbarten Strängen bevorzugt entweder bei 360°/n oder bei 360°/2n liegen. Alternativ ist es aber auch möglich, dass die Strangzahl n ein Vielfaches von drei beträgt, und dass die n Stränge in drei übergeordnete Gruppen aufgeteilt sind. Dann kann die Phasenverschiebung zwischen den mittleren Phasen der jeweiligen Gruppen 120° betragen, und die Phasenverschiebung innerhalb der jeweiligen Gruppe kann beispielsweise entweder 360°/n oder 360°/2n betragen. Dabei ist eine Phasenverschiebung von 360°/n bei doppelter Zonung besonders bevorzugt, und eine Phasenverschiebung von 360°/2n ist bei einfacher Zonung besonders bevorzugt. Bei diesen bevorzugten Ausgestaltungen sind die Phasenverschiebungen aller benachbarten Leiterzweige insgesamt gleichverteilt, und die räumliche und zeitliche Phasenverschiebung stimmt für die jeweiligen Stränge überein. Eine solche Gleichverteilung und Übereinstimmung ist für das Erreichen einer hohen Feldausnutzung besonders günstig.

Die magnetische Polzahl p der elektrischen Maschine kann vorteilhaft zwischen 2 und 12, insbesondere zwischen 6 und 12 und besonders vorteilhaft bei genau 8 liegen. Eine derartige Ausgestaltung ist besonders vorteilhaft, um eine hohe Leistungsdichte zu erreichen. Der bevorzugte Bereich ergibt sich dabei daraus, dass einerseits mit steigender Polzahl das radiale Luftspaltfeld und somit die die induzierte Spannung sinkt, dass aber andererseits mit steigender Polzahl die elektrische Frequenz bei gleicher Drehzahl steigt. Der zweite Effekt steigert die induzierte Spannung, so dass sich insgesamt bei typischen Geometrien ein Optimum für die Leistung innerhalb der genannten Bereiche ergibt. Zusätzlich gibt es noch weitere Effekte, beispielsweise dass bei kleinen Polzahlen eine größere Jochdicke gewählt werden muss, was wiederum das Gewicht beeinflusst. Solche Faktoren bestimmen ebenfalls den bevorzugten Polzahlbereich für eine optimale Leistungsdichte.

Nachfolgend wird die Erfindung anhand einiger bevorzugter Ausführungsbeispiele unter Bezugnahme auf die angehängten Zeichnungen beschrieben, in denen:
- Figur 1: einen schematischen Längsschnitt einer elektrischen Maschine nach einem ersten Ausführungsbeispiel zeigt,
- Figur 2: eine schematische perspektivische Ansicht einer Statorwicklung nach dem Stand der Technik zeigt,
- Figur 3: eine Spulenanordnung eines ausgewählten Strangs u1 aus der Statorwicklung der Figur 2 zeigt,
- Figur 4: das Wickelschema und die zugehörige Feldausnutzung der Statorwicklung der Figur 2 zeigt,
- Figur 5: das Wickelschema und die zugehörige Feldausnutzung einer Statorwicklung nach einem Ausführungsbeispiel der Erfindung zeigt,
- Figur 6: einen Ausschnitt eines ausgewählten Strangs u1 aus der Statorwicklung des Beispiels der Figur 5 zeigt und
- Figur 7: das Wickelschema und die zugehörige Feldausnutzung einer Statorwicklung nach einem weiteren Beispiel der Erfindung zeigt.

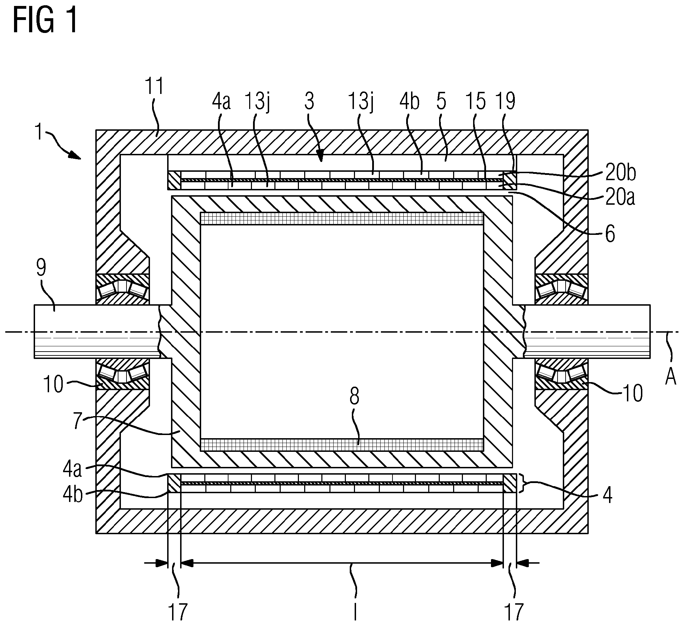

In Figur 1 ist eine elektrische Maschine 1 nach einem ersten Ausführungsbeispiel der Erfindung im schematischen Längsschnitt gezeigt. Die elektrische Maschine 1 umfasst einen Rotor 7 und einen Stator 3. Der Rotor 7 ist mittels einer Rotorwelle 9 um eine Rotationsachse A drehbar gelagert. Hierzu ist die Rotorwelle 9 über die Lager 10 gegen das Maschinengehäuse 11 abgestützt. Gezeigt ist ein Längsschnitt entlang der Rotationsachse A, die gleichzeitig die zentrale Maschinenachse ist. Bei der elektrischen Maschine kann es sich grundsätzlich um eine Motor oder einen Generator handeln oder auch um eine Maschine, die in beiden Modi betrieben werden kann.

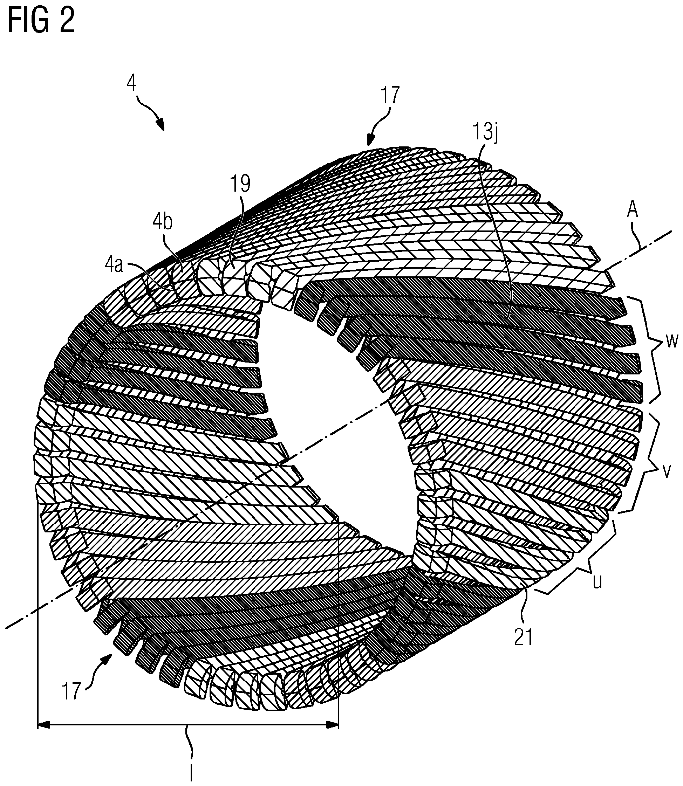

Der Stator 3 weist eine Statorwicklung 4 mit einer Mehrzahl von Leiterwindungen 13j auf. Im axial innenliegenden Teilbereich l des Stators 3 - der hier den Hauptteil der axialen Länge ausmacht - sind diese Leiterwindungen 13j helixartig ausgestaltet. Die einzelnen Leiterwindungen 13j verlaufen also schräg zur Hauptachse und sind jeweils auf einer Zylindermantelfläche um diese Achse A angeordnet. Insgesamt sind die Leiterzweige der einzelnen Leiterwindungen 13j auf zwei solchen Zylindermantelflächen verteilt, nämlich auf eine Unterlage 4a im Bereich einer inneren Zylindermantelfläche 20a und eine Oberlage 4b im Bereich einer äußeren Zylindermantelfläche 20b, wobei diese beiden Lagen ineinander geschachtelt und konzentrisch um die zentrale Achse A angeordnet sind. Die Leiterzweige der Unterlage 4a und der Oberlage 4b weisen einen entgegengesetzten Drehsinn auf, was im Zusammenhang mit den Figuren 2 bis 4 noch deutlicher wird. In den axialen Endbereichen 17 der Statorwicklung 4 sind einander zugehörige Leiterzweige der Oberlage 4b und der Unterlage 4a durch Verbindungsleiter 19 elektrisch leitend miteinander verbunden. Diese Verbindungsleiter 19 überbrücken sowohl den radialen Abstand zwischen Oberlage 4b und Unterlage 4a als auch den (im vorliegenden Schnittbild nicht erkennbaren) Winkelversatz in Umfangsrichtung zwischen den einzelnen zu verbindenden Leiterzweigen der Oberlage 4b und der Unterlage 4a. Im axial innenliegenden Bereich l sind Oberlage 4b und Unterlage 4a durch eine Lagenisolation 15 elektrisch gegeneinander isoliert. Alternativ oder zusätzlich kann eine solche Isolation der beiden Leiterlagen aber auch durch eine isolierende Umhüllung jedes einzelnen Leiterzweiges erreicht werden.

Vor allem die im Teilbereich l axial weiter innenliegenden Bereiche der Statorwicklung 4 treten beim Betrieb der elektrischen Maschine 1 in elektromagnetische Wechselwirkung mit einem Feld des Rotors. Diese Wechselwirkung findet über einen Luftspalt 6 hinweg statt, der radial zwischen Rotor 7 und Stator 3 liegt. Die Statorwicklung 4 wird im gezeigten Beispiel von einem amagnetisch ausgebildeten Statorträger 5 getragen, es handelt sich hier also um eine Luftspaltwicklung ohne Eisenzähne zwischen den Windungen der Wicklung. Durch den beschriebenen Winkelversatz in Umfangsrichtung zwischen den in den axialen Endbereich miteinander verbundenen Leiterzweigen ist im vorliegenden Beispiel die elektromagnetische Wechselwirkung auch in diesen Endbereichen nicht gleich Null. Vielmehr liegt durch die erfindungsgemäße Ausgestaltung des Stators mit einer entsprechenden "Spreizung" der miteinander verbundenen Leiterzweige auch in den Endbereichen eine von Null verschiedene Feldausnutzung vor.

Die elektrische Maschine der Figur 1 weist im Rotor 7 eine supraleitende Feldwicklung 8 auf. Hierzu kann der Rotor 7 im Betrieb auf eine kryogene Temperatur gekühlt werden, die unterhalb der Sprungtemperatur des verwendeten Supraleiters liegt. Diese Betriebstemperatur kann beispielsweise im Bereich von etwa 20 K bis 77 K liegen. Die Kühlung kann mit einem in der Abbildung nicht näher dargestellten Kühlsystem erreicht werden. Die tiefkalten Komponenten sollten außerdem thermisch gegen die warme Umgebung isoliert sein.

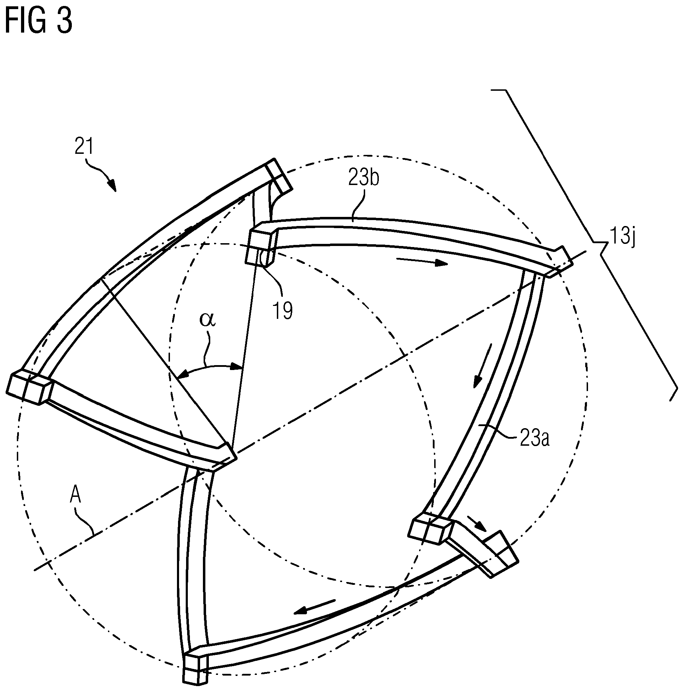

Die genaue Ausgestaltung der Statorwicklung im Beispiel der Figur 1 soll anhand der folgenden Figuren näher erläutert werden. Hierzu wird zunächst anhand der Figuren 2 und 3 eine ähnlich aufgebaute, aber nicht erfindungsgemäße Statorwicklung beschrieben, die im Unterschied zum Beispiel der Figur 1 keinen Winkelversatz in Umfangsrichtung zwischen den miteinander zu verbindenden Leiterzweigen aufweist.

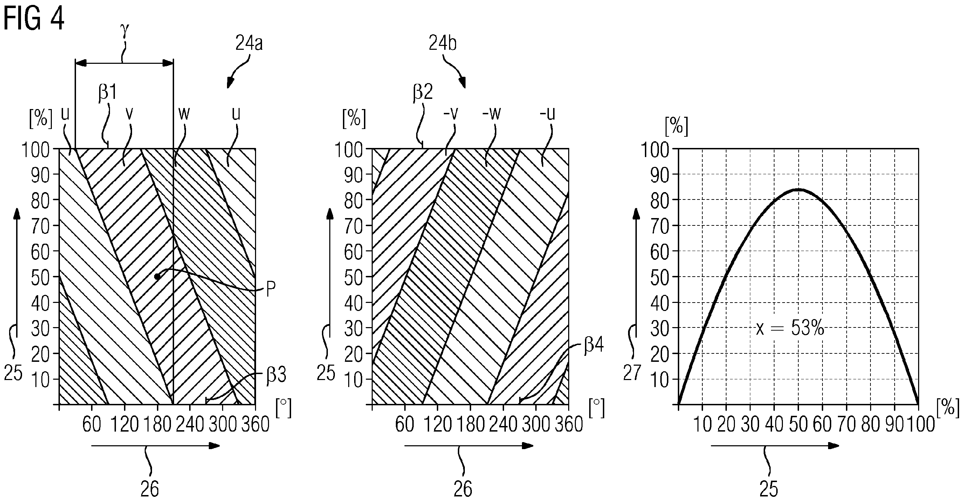

Figur 2 zeigt eine schematische perspektivische Ansicht einer entsprechenden Statorwicklung 4 ohne azimutalen Versatz in den axialen Endbereichen. Diese Statorwicklung 4 ist als helixartige Wicklung ausgebildet, bei der die einzelnen Leiterwindungen 13j innerhalb des axial innenliegenden Bereichs l helixartig um die zentrale Achse A angeordnet sind. Die Statorwicklung 4 des gezeigten Beispiels ist in drei Stränge u, v und w unterteilt. Diese Stränge entsprechen einzelnen Phasen des Dreiphasen-Wechselstroms, der mit der elektrischen Maschine entweder generiert oder in mechanische Energie umgesetzt werden kann. Jeder Strang weist vier in Umfangsrichtung nebeneinanderliegende Spulenanordnungen auf, die jeweils aus einer Mehrzahl von zu einer Leiterschleife verbundenen Leiterzweigen zusammengesetzt sind. Diese Leiterzweige sind in eine Gruppe von ersten Leiterzweigen gegliedert, die auf der Unterlage 4a der Spulenwicklung angeordnet sind und in eine Gruppe von zweiten Leiterzweigen, die auf der Oberlage 4b der Spulenwicklung angeordnet sind. Die Leiterzweite der Unterlage 4a liegen also alle auf einer inneren Zylindermantelfläche, und die Leiterzweige der Oberlage liegen alle auf einer äußeren Zylindermantelfläche. Innerhalb jeder der beiden Lagen 4a und 4b weisen die Leiterzweige alle dieselbe Schrägung und denselben Drehsinn auf, so dass innerhalb der einzelnen Lagen Überkreuzungen von Leiterzweigen vermieden werden. Im axialen Bereich l sind die einzelnen Leiter gegeneinander elektrisch isoliert und Ober- und Unterlage sind nicht miteinander verbunden. Die elektrischen Verbindungen, die die Leiterzweige zu einer übergeordneten Spulenanordnung zusammenfügen, sind in den axialen Endbereichen 17 angebracht. Hier sind Verbindungsleiter 19 zur Verbindung von Ober- und Unterlage angeordnet. Im gezeigten Beispiel der Figur 4 ist (im Gegensatz zu den später beschriebenen erfindungsgemäßen Beispielen) die Schrägung der einzelnen Leiterzweige so gewählt, dass die zueinander gehörigen Leiterzweige eines Strangs in den Endbereichen 17 gerade an derselben Umfangsposition aufeinander treffen. Durch die Verbindungsleiter 19 muss hier also nur der radiale Abstand von Ober- und Unterlage überbrückt werden. Der Verbindungsleiter überbrückt dementsprechend keinen Abstand in Umfangsrichtung.

Zum besseren Verständnis der Figur 2 zeigt Figur 3 beispielhaft den Verlauf der einzelnen Leiterzweige einer ausgewählten Spulenanordnung 21 des Strangs u. Es handelt sich also um eine der vier parallel nebeneinander geführten Spulenanordnungen dieses Stranges u. Zur besseren Übersicht ist noch die Zylindermantelfläche eingezeichnet, die genau zwischen der Oberlage 4b und der Unterlage 4a der Wicklung verläuft. Die ausgewählte Spulenanordnung 21 des Strangs u weist vier einzelne Windungen 13j auf, wobei jede dieser Windungen zwei Leiterzweige aufweist: einen ersten Leiterzweig 23a, der als Hinleiter den Strom mit einer ersten axialen Richtungskomponente leitet und einen zweiten Leiterzweig 23b, der als Rückleiter den Strom bei gleicher übergeordneter Stromrichtung mit einer entgegengesetzten zweiten axialen Richtungskomponente leitet. Diese Richtungskomponenten sind beispielhaft für eine vorgegebene übergeordnete Stromrichtung zu einem gegebenen Zeitpunkt durch die Pfeile in Figur 3 angedeutet. Die vier ersten Leiterzweige 23a sind entsprechend zusammen auf der Zylindermantelfläche der Unterlage 4a angeordnet, und die vier zweiten Leiterzweige 23b sind zusammen auf der Zylindermantelfläche der Oberlage 4b angeordnet. Diese acht Leiterzweige 23a und 23b sind über die in den axialen Endbereichen 17 vorgesehenen Verbindungsleiter 19 zu der zusammenhängenden zick-zack-förmigen Spulenanordnung 21 verbunden. Die übrigen Spulenanordnungen der Stränge u, v und w sind analog aufgebaut und auf denselben Zylindermantelflächen angeordnet. Sie sind nur jeweils in Umfangsrichtung entsprechend versetzt, wie in Figur 2 zu erkennen. Die gezeigte Aufteilung eines solchen Spulenanordnung 21 in vier Hin- und vier Rückleiter entspricht der Ausbildung der Statorwicklung zur Anwendung in einer achtpoligen elektrischen Maschine, mit anderen Worten einer Maschine, deren Rotor zur Ausbildung eines achtpoligen rotierenden Magnetfeldes ausgelegt ist. Für allgemeine Polzahlen p entspricht die Zahl i der Leiterwindungen 13j in einem solchen Strang vorteilhaft der halben Anzahl der magnetischen Pole oder einem ganzzahligen Vielfachen davon. Die Gesamtzahl i der Leiterwindungen 13j (und somit sowohl die Zahl der jeweiligen Hinleiter 23a als auch der jeweiligen Rückleiter 23b) in einem Stator mit n Strängen entspricht also wenigstens n^{∗}p/2.

In der nicht erfindungsgemäßen Ausführung der Figur 3 ist die Ganghöhe h der helixförmigen Leiterabschnitte so gewählt, dass sie genau dem Produkt von axialer Länge l der helixförmigen Leiterabschnitte und der Polzahl p entspricht. Da die Ganghöhe h als die axiale Länge für eine volle Umdrehung der Helix definiert ist, wird also auf der gegebenen Länge l genau der Winkelbereich eines magnetischen Pols überstrichen. Diesen Winkelbereich von 360°/p bezeichnet man auch als "Polteilung". Im gezeigten Beispiel ist die Ganghöhe also so gewählt, dass die einzelnen Leiterzweige 23a bzw. 23b auf ihrer axialen Länge l sich genau um den Winkel α von einer Polteilung, also 360°/p drehen. Aufgrund der Polzahl von p = 8 ergibt sich hier pro Leiterzweig ein Winkel von α = 45°.

Figur 4 zeigt das Wickelschema und die zugehörige Feldausnutzung der Statorwicklung 4 der Figuren 2 und 3. Das Wickelschema ist in ein Teilschema 24a für die Unterlage 4a und ein Teilschema 24b für die Oberlage 4b der Wicklung aufgeteilt. Das Wickelschema 24a verdeutlicht also die geometrische Anordnung der ersten Leiterzweige 23a auf dem inneren Zylindermantel, und das Wickelschema 24b verdeutlicht die Anordnung der zweiten Leiterzweige 23b auf dem äußeren Zylindermantel. In den beiden Wickelschemata 24a und 24b sind die Anordnungen der nebeneinander liegenden Leiterzweige der Spulenanordnungen der jeweiligen Stränge u, v und w in Abhängigkeit von der axialen Länge 25 und vom elektrischen Winkel 26 gezeigt. Der elektrische Winkel ergibt sich dabei als Produkt von geometrischem Winkel und Polpaarzahl. Mit anderen Worten ist bei einer zweipoligen Maschine der elektrische Winkel mit dem geometrischen Drehwinkel bezüglich der Wicklungsachse A identisch. Bei höherpoligen Maschinen ist dagegen ein elektrischer Winkel von 360° erreicht, wenn ein geometrischer Winkel überstrichen wurde, der dem Winkelabstand zweier benachbarter gleicher magnetischer Pole (z.B. Nordpol - Nordpol) entspricht. Das Wickelschema 24a der Figur 4 zeigt also entsprechend den geometrischen Verlauf der Leiterzweige der drei Stränge u, v und w über die gesamte axiale Länge l und über einen Winkelbereich zwischen zwei magnetischen Nordpolen. Der gezeigte elektrische Winkelbereich von 0° bis 360° entspricht bei der in Figur 2 gezeigten achtpoligen Statorwicklung (vier Polpaare, p=8) einem geometrischen Winkelbereich von 0° bis 90°, also einem Viertel des vollen Wicklungsumfangs. Der gesamte geometrische Wicklungsverlauf ergibt sich dann entsprechend durch vierfaches Aneinanderreihen des gezeigten Wickelschemas 24a für die Unterlage und des gezeigten Wickelschemas 24b für die Oberlage. Auch aus den beiden Wickelschemata 24a und 24b ist ersichtlich, dass - wie bereits aus den Figuren 2 und 3 erkennbar - die an den axialen Enden zu verbindenden Leiterzweige eines jeweiligen Stranges ohne Versatz an denselben Umfangspositionen aneinanderstoßen. Der elektrische Schrägungswinkel γ ergibt sich dabei durch die Relation γ = α ^{∗} p/2, es gilt hier also γ = 180°, wie auch für die Lage 24a in linken unteren Teil der Figur 4 zu erkennen ist. Mit den genannten Schrägungswinkeln von γ = 180° (elektrisch) und α = 45° (geometrisch) ergibt sich aufgrund der Beziehung h = 360°/α ^{∗} l eine geometrische Ganghöhe h von 8^{∗}l, also genau der Polzahl p mal axiale Länge l. Durch diese genau angepasste Schrägung liegen in den axialen Endbereichen die Mittelpunkte der Stränge u, v, w in der Unterlage 24a und der jeweiligen zugehörigen Stränge -u, -v, -w mit umgekehrter Stromflussrichtung in der Oberlage 24b bei genau denselben elektrischen Winkeln. Für den Strang v (bzw. -v) ist dies im oben dargestellten axialen Endbereich (100%) der Winkel β1 = β2 = 90° und im unten dargestellten axialen Endbereich (0%) der Winkel β3 = β4 = 270°.

Im rechten Teil der Figur 4 ist die Feldausnutzung 27 dieser Statorwicklung als Funktion der axialen Position 25 (wiederum in Prozent der Gesamtlänge l) gezeigt. Diese Feldausnutzung ist als relative Feldausnutzung des im Bereich der Statorwicklung wirksamen Erregerfeldes zu verstehen, und zwar in Relation zur Feldausnutzung einer vergleichbaren elektrischen Maschine mit einer geraden Wicklung und einer Lochzahl von 1 (also bei einer Nut pro Polzahl und Strang). Numerisch wurde dafür jeweils der Mittelwert des Wicklungsfaktors der Grundwelle über die axiale Länge bestimmt. Es ist leicht zu erkennen, dass die Feldausnutzung nur im mittleren Bereich der axialen Länge über 80% des Vergleichswertes liegt. In den axialen Endbereichen ist dagegen ein steiler Abfall gegen 0% zu erkennen. Der Abfall auf 0% ist ein grundlegender Nachteil dieser nicht erfindungsgemäßen helixartigen Wicklung ohne Umfangsversatz zwischen den zueinander gehörigen Leiterzweigen in den axialen Endbereichen. Die mittlere (also über die axiale Länge l gemittelte) Feldausnutzung x liegt entsprechend nur bei 53 %. Die elektrische Phasenverschiebung zwischen den einzelnen Strängen u, v und w beträgt hierbei jeweils 120°.

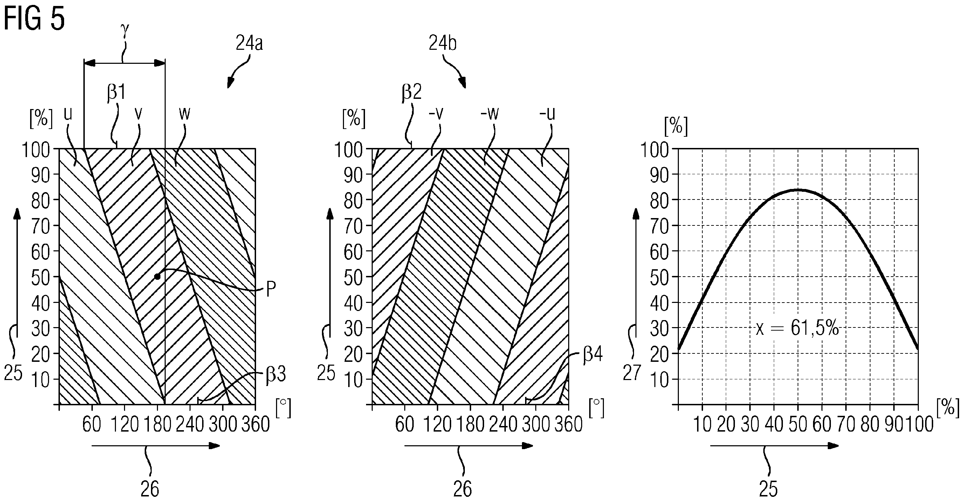

Zum Vergleich sind in Figur 5 die entsprechenden Wickelschemata 24a und 24b und die Feldausnutzung für eine helixartige Statorwicklung nach einem Ausführungsbeispiel der Erfindung gezeigt. Diese Statorwicklung ist bezüglich der Strangzahl n=3, der helixartigen Anordnung der Leiterzweige und der Aufteilung auf eine Oberlage und Unterlage ähnlich aufgebaut wie die Statorwicklung des vorab beschriebenen Ausführungsbeispiels. Allerdings ist hier die Schrägung der einzelnen Leiterzweige auf den beiden Zylindermantelflächen reduziert, so dass sich eine größere Ganghöhe und entsprechend in den axialen Endbereichen ein azimutaler Versatz zwischen den zu verbindenden Leiterzweigen einer übergeordneten Spulenanordnung ergibt. Im gezeigten Ausführungsbeispiel der Figur 5 ist die Schrägung der parallel geführten Leiterzweige der jeweiligen Lage so gewählt, dass die einzelnen Leiterzweige sich über ihre axiale Länge um einen elektrischen Winkelbeitrag γ drehen, der bei 150° liegt. Dies entspricht einer Drehung um einen geometrischen Winkelbeitrag α = γ/(p/2). Bei der vorliegenden Polzahl p=8 ergibt sich also ein geometrischer Winkelbeitrag von α = 37,5°. Gegenüber dem geometrischen Drehwinkel von α = 45° in der nicht erfindungsgemäßen Ausführung der Figuren 2-4 ist dies eine Reduktion des geometrischen Schrägungswinkels um 7,5°.

Mit den genannten Schrägungswinkeln von y= 150° (elektrisch) und α = 37,5° (geometrisch) ergibt sich aufgrund der Beziehung h = 360°/α ^{∗} l eine geometrische Ganghöhe h von 9,6^{∗}l. Im Einklang mit den erfindungsgemäßen Merkmalen ist diese Ganghöhe also größer als das Produkt der axialen Länge l und der Polzahl p, wobei hier p=8 ist.

Durch die reduzierte Schrägung (im Vergleich zur nicht erfindungsgemäßen Statorwicklung der Figuren 2 bis 4) ergibt sich beim Ausführungsbeispiel der Figur 5 ein Versatz zwischen den zu verbindenden Leiterenden in den axialen Endbereichen. Im Beispiel der Figur 5 sind die Leiterzweige so über die beiden ineinander liegenden Zylindermantelflächen verteilt, dass der entsprechende Versatz in den beiden axialen Endbereichen gleich gewählt ist. Es ist aber auch grundsätzlich möglich, dass der Versatz nicht symmetrisch ist, also in einem axialen Endbereich größer ist als auf der gegenüberliegenden Seite. Bei der symmetrischen Ausführung der Figur 5 ergibt sich in beiden axialen Endbereichen ein Versatz im elektrischen Winkel von 30°. Dieser Versatz ergibt sich beispielsweise aus der Differenz der mittleren Winkelposition β1 des Strangs v der Unterlage 24a und der mittleren Winkelposition β2 des entsprechenden Strangs -v in der Oberlage 24b, und zwar jeweils am oben dargestellten axialen Ende (100%). Da der Mittelpunkt P des Strangs v bei den elektrischen Koordinaten 180°, 50% für elektrischen Winkel und axiale Länge liegt und des Strangs -v in der Oberlage 24b bei den elektrischen Koordinaten 360°, 50% für elektrischen Winkel und axiale Länge liegt, ergibt sich zusammen mit dem geometrischen Schrägungswinkel γ = 37,5° ein Wert für β1 von 180°-37,5°^{∗}2 = 105° und für β2 von 0°+37,5°^{∗}2=75°. Die Differenz, also der elektrische Winkelversatz zwischen den Mittelpunkten der zu verbindenden Leitern der Stränge v und -v, ergibt sich daher zu β1-β2 = 30°. Analog ergibt sich am unten dargestellten axialen Ende (0%) ein elektrischer Winkel für den Mittelpunkt der Teilleiter von v von β3 = 180°+37,5°^{∗}2 = 255°, ein elektrischer Winkel für den Mittelpunkt der Teilleiter von -v von β4 = 360°-37,5°^{∗}2=285° und wiederum ein elektrischer Winkelversatz von 30°. Dies entspricht an beiden axialen Enden einem geometrischen Winkelversatz von 30°/(p/2), also hier 7,5°, der von den elektrischen Verbindungsleitern überbrückt werden muss.

Der Vorteil des beschriebenen Ausführungsbeispiels im Vergleich zur Statorwicklung der Figuren 2 bis 4 ist im rechten Teil der Figur 5 zu erkennen: Durch die reduzierte Schrägung und den Winkelversatz in den Endbereichen ergibt sich eine Erhöhung der mittleren Feldausnutzung von 53% in Figur 4 auf 61,5% für das Beispiel der Figur 5. Dies ist vor allem auf eine Erhöhung der Feldausnutzung in den axialen Endbereichen zurückzuführen, die beim Beispiels der Figur 5 nicht mehr auf Null abfällt, sondern nur noch auf Werte knapp über 20%.

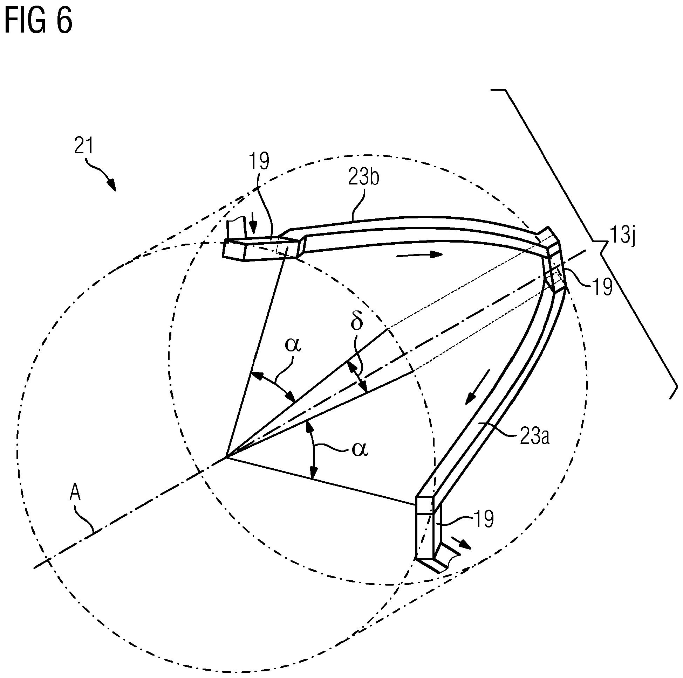

In Figur 6 ist beispielhaft ein Ausschnitt einer einzelnen Spulenanordnung 21 im Bereich einer Leiterwindung 13j mit Hinleiter 23a und Rückleiter 23b für die Statorwicklung des Beispiels der Figur 5 gezeigt. Die ausgewählte Spulenanordnung und die Art der Darstellung ist analog zur Figur 3 gewählt, wobei der Übersichtlichkeit halber nur ein Ausschnitt im Bereich der einen Leiterwindung 13j gezeigt ist. Wie in Figur 6 zu erkennen, ist der elektrische Verbindungsleiter 19 so ausgestaltet, dass der den geometrischen Winkelversatz von δ = 7,5° zwischen den zu verbindenden Leiterzweigen 23a und 23b überbrücken kann. Ein entsprechender Winkelversatz wird auch durch die weiteren, hier nicht größtenteils dargestellten Verbindungsleiter überbrückt, die die acht Hinleiter und acht Rückleiter zu einer übergeordneten Spulenanordnung 21 verbinden. Zur Bildung eines einzelnen Stranges (beispielsweise u) sind jeweils vier solche zick-zack-förmigen Spulenanordnungen 21 nebeneinander geführt, analog dazu wie dies in Figur 2 für die Ausführung ohne Winkelversatz gezeigt ist. Es ist zu beachten, dass das Verhältnis der gezeigten Winkel α und δ in Figur 6 nicht maßstabsgetreu dargestellt ist. Die Figur zeigt das Vorliegen eines Winkelversatzes δ nur schematisch und ist nicht zum Ablesen von absoluten Winkeln geeignet.

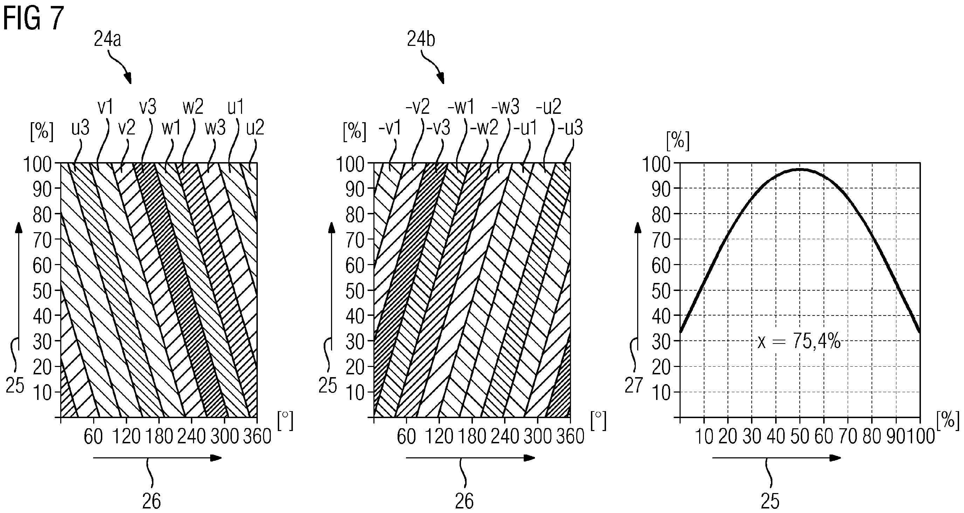

In Figur 7 sind ein weiteres Wickelschema und die zugehörige Feldausnutzung für ein weiteres Ausführungsbeispiel der Erfindung gezeigt. So zeigt Figur 7 die entsprechenden Wickelschemata 24a und 24b von Unter- und Oberlage sowie die Feldausnutzung für eine Statorwicklung ähnlich wie in Figur 5, die jedoch neun statt nur drei Stränge aufweist. Durch die Erhöhung der Strangzahl ist die mittlere Feldausnutzung gegenüber dem Beispiel der Figur 5 von 61,5% auf 75,4% erhöht. Die elektrische Phasenverschiebung zwischen den einzelnen Strängen beträgt hierbei jeweils 40°, so dass die Phasen der nebeneinanderliegenden Stränge insgesamt gleichmäßig verteilt sind.

Ein Vergleich der Figuren 5 und 7 zeigt, dass die Erhöhung der Strangzahl von n = 3 auf n = 9 die Feldausnutzung auf der gesamten axialen Länge l erhöht. Es steigt sowohl die Lage des Maximums im axial innenliegenden Teil auf einen Wert von über 97% als auch die Feldausnutzung in den axialen Endbereichen auf Werte von über 30%.

Insbesondere durch die Kombination der beschriebenen Maßnahmen - also durch die Erhöhung der Phasenzahl einerseits und durch die verminderte Schrägung kombiniert mit Versatz in Umfangsrichtung andererseits - ergibt sich insgesamt eine deutliche Steigerung der mittleren Feldausnutzung im Vergleich zum Stand der Technik. Es kann jedoch auch jede der beiden Maßnahmen für sich angewendet werden (und insbesondere auch für sich allein mit anderen beschriebenen vorteilhaften Ausgestaltungen kombiniert werden), um bereits einen Teil der maximal möglichen Verbesserung der Feldausnutzung mit einem gegenüber der Kombination beider Maßnahmen reduzierten apparativen Aufwand zu erreichen.

Alternativ zu den gezeigten Ausführungsbeispielen mit doppelter Zonung ist es grundsätzlich auch möglich, dass eine Statorwicklung mit einfacher Zonung vorliegt. Dann ist es besonders vorteilhaft - wenn auch nicht zwingend - dass die Phasenverschiebung zwischen den einzelnen benachbarten Strängen 360°/2n beträgt. Die Zahl der Leiterzweige pro Lage ist bei einfacher Zonung im Vergleich zur doppelten Zonung um einen Faktor zwei erhöht. Dabei liegen in jeder Lage sowohl Hin- als auch Rückleiter desselben Stranges vor.

## Patentansprüche

1. Stator (3) für eine elektrische Wechselstrom-Maschine (1) mit einer magnetischen Polzahl p,
- wobei der Stator (3) eine zentrale Achse A aufweist,
- wobei der Stator (3) eine Statorwicklung (4) mit einer Mehrzahl von Leiterwindungen (13j) aufweist,
- wobei die einzelnen Leiterwindungen (13j) zu insgesamt n elektrischen Strängen (u,v,w) gruppiert sind,
- wobei die Leiterwindungen (13j) eines Stranges jeweils wenigstens einen ersten (23a) und einen zweiten Leiterzweig (23b) aufweisen,
- wobei diese Leiterzweige (23a, 23b) auf dem überwiegenden Teil (l) ihrer Länge helixartig um die zentrale Achse (A) angeordnet sind,
**dadurch gekennzeichnet, dass** diese helixartig angeordneten Leiterzweige (23a, 23b) jeweils eine Ganghöhe h aufweisen, die größer ist als das Produkt der axialen Länge l der helixartigen Leiterzweige (13j) und der Polzahl p.

2. Stator (3) nach Anspruch 1,
- bei welchem die Statorwicklung (4) in den axialen Endbereichen (17) elektrisch leitende Verbindungsleiter (19) zwischen ersten Leiterzweigen (23a) und zweiten Leiterzweigen (23b) aufweist,
- und wobei diese Verbindungsleiter (19) sowohl eine radiale Richtungskomponente als auch eine Richtungskomponente in Umfangsrichtung aufweisen.

3. Stator (3) nach Anspruch 2,
- bei welchem die elektrisch leitenden Verbindungsleiter (19) derart ausgestaltet sind, dass sich für jeden Strang (u, v, w) zumindest eine übergeordnete Spulenanordnung (21) ergibt.

4. Stator (3) nach einem der Ansprüche 1 bis 3, bei welchem die Statorwicklung (4) eine Anzahl i von Leiterwindungen (13j) aufweist, wobei i entweder dem Produkt von Polzahl p und Strangzahl n oder der Hälfte des Produkts von Polzahl p und Strangzahl n entspricht.

5. Stator (3) nach Anspruch 4,
- bei welchem jede der i Leiterwindungen einen ersten Leiterzweig (23a) und einen zweiten Leiterzweig (23b) aufweist
- und bei welchem die Ganghöhe h so gewählt ist, dass die jeweiligen Leiterzweige (23a,23b) sich über ihre axiale Länge l helixartig um einen Winkel α drehen,
wobei α einen Wert aufweist, der bei wenigstens
α = 360°/p - 2^{∗}360°/i liegt und kleiner als α = 360°/p ist.

6. Stator (3) nach einem der vorhergehenden Ansprüche,
- bei welchem die ersten Leiterzweige (23a) der einzelnen Leiterwindungen (13j) auf einer gemeinsamen inneren Zylindermantelfläche (20a) angeordnet sind
- und bei welchem die zweiten Leiterzweige (23b) der einzelnen Leiterwindungen (13j) auf einer gemeinsamen äußeren Zylindermantelfläche (20b) angeordnet sind.

7. Stator (3) nach Anspruch 6, bei welchem die Statorwicklung (4) so ausgestaltet ist,
- dass die ersten Leiterzweige (23a) auf der inneren Zylindermantelfläche (20a) eine gemeinsame erste Windungsrichtung aufweisen
- und dass die zweiten Leiterzweige (23b) auf der äußeren Zylindermantelfläche (20b) eine gemeinsame zweite Windungsrichtung aufweisen,
die der ersten Windungsrichtung entgegengesetzt ist.

8. Stator (3) nach einem der Ansprüche 1 bis 7, bei welchem Anzahl n der Stränge (u1, u2, u3, v1, v2, v3, w1, w2, w3) größer als drei ist, insbesondere ein ganzzahliges Vielfaches von drei.

9. Stator (3) nach einem der Ansprüche 1 bis 8, bei welchem die Statorwicklung (4) als Luftspaltwicklung ausgeführt ist.

10. Elektrische Maschine (1) mit einem Stator (3) nach einem der Ansprüche 1 bis 9.

11. Elektrische Maschine (1) nach Anspruch 10, welche zusätzlich einen Rotor (7) aufweist, der zur Erzeugung eines Magnetfeldes mit p Polen ausgebildet ist.

12. Elektrische Maschine (1) nach Anspruch 11, bei welchem der Rotor (7) mit wenigstens einer supraleitenden Erregerwicklung (8) ausgestattet ist.

13. Elektrische Maschine (1) nach einem der Ansprüche 10 bis 12, welche wenigstens einen Umrichter aufweist, um eine Phasenverschiebung zwischen den in den einzelnen Strängen der Statorwicklung (4) fließenden Strömen zu erzeugen und/oder aufzuheben.

14. Elektrische Maschine (1) nach einem der Ansprüche 10 bis 13, bei welcher die magnetische Polzahl p zwischen 2 und 12, insbesondere bei 8, liegt.

15. Elektrische Maschine (1) nach einem der Ansprüche 10 bis 14, welche als Generator oder als Antriebsmotor für ein Luftfahrzeug ausgestaltet ist.

## Claims

1. Stator (3) for an AC electric machine (1) with a number p of magnetic poles,
- wherein the stator (3) has a central axis A,
- wherein the stator (3) has a stator winding (4) with a plurality of conductor turns (13j),
- wherein the individual conductor turns (13j) are grouped into a total of n electrical phases (u,v,w),
- wherein the conductor turns (13j) of a phase each have at least a first conductor branch (23a) and a second conductor branch (23b),
- wherein these conductor branches (23a, 23b) are arranged helically around the central axis (A) over the greatest part (1) of their length,
**characterized in that**
these helically arranged conductor branches (23a, 23b) each have a pitch h that is greater than the product of the axial length 1 of the helical conductor branches (13j) and of the pole number p.

2. Stator (3) according to Claim 1,
- in which the stator winding (4) has electrically conductive connecting conductors (19) in the axial end regions (17) between first conductor branches (23a) and second conductor branches (23b),
- and wherein these connecting conductors (19) have both a radial direction component and a direction component in the peripheral direction.

3. Stator (3) according to Claim 2,
- in which the electrically conductive connecting conductors (19) are configured such that, for each phase (u, v, w), there is at least one superordinate coil arrangement (21).

4. Stator (3) according to one of Claims 1 to 3, in which the stator winding (4) has a number i of conductor turns (13j), where i corresponds either to the product of the pole number p and of the phase number n or to half of the product of the pole number p and of the phase number n.

5. Stator (3) according to Claim 4,
- in which each of the i conductor turns has a first conductor branch (23a) and a second conductor branch (23b),
- and in which the pitch h is chosen such that the respective conductor branches (23a, 23b) turn helically over their axial length l through an angle α,
where α has a value which is at least α = 360°/p - 2^{∗}360°/i and is less than α = 360°/p.

6. Stator (3) according to one of the preceding claims,
- in which the first conductor branches (23a) of the individual conductor turns (13j) are arranged on a common inner cylinder surface (20a),
- and in which the second conductor branches (23b) of the individual conductor turns (13j) are arranged on a common outer cylinder surface (20b).

7. Stator (3) according to Claim 6, in which the stator winding (4) is configured such that
- the first conductor branches (23a) on the inner cylinder surface (20a) have a common first winding direction,
- and the second conductor branches (23b) on the outer cylinder surface (20b) have a common second winding direction,
which is opposite the first winding direction.

8. Stator (3) according to one of Claims 1 to 7, in which the number n of phases (u1, u2, u3, v1, v2, v3, w1, w2, w3) is greater than three, in particular an integer multiple of three.

9. Stator (3) according to one of Claims 1 to 8, in which the stator winding (4) is in the form of an air gap winding.

10. Electric machine (1) with a stator (3) according to one of Claims 1 to 9.

11. Electric machine (1) according to Claim 10, said electric machine additionally having a rotor (7) that is designed to generate a magnetic field with p poles.

12. Electric machine (1) according to Claim 11, in which the rotor (7) is equipped with at least one superconductive excitation winding (8).

13. Electric machine (1) according to one of Claims 10 to 12, said electric machine having at least one converter for producing and/or removing a phase shift between the currents flowing in the individual phases of the stator winding (4).

14. Electric machine (1) according to one of Claims 10 to 13, in which the number p of magnetic poles is between 2 and 12, in particular 8.

15. Electric machine (1) according to one of Claims 10 to 14, said electric machine being in the form of a generator or a drive motor for an aircraft.

## Revendications

1. Stator (3) destiné à un moteur électrique à courant alternatif (1) comportant un nombre p de pôles magnétiques,
- dans lequel le stator (3) présente un axe central A,
- dans lequel le stator (3) présente un enroulement statorique (4) comportant une pluralité de spires conductrices (13j),
- dans lequel les spires conductrices individuelles (13j) sont regroupées pour former au total n phases électriques (u,v,w),
- dans lequel les spires conductrices (13j) d'une phase présentent chacune au moins une première (23a) et une seconde branche conductrice (23b),
- dans lequel lesdites branches conductrices (23a, 23b) sont agencées de manière hélicoïdale autour de l'axe central (A) sur la plus grande partie (1) de leur longueur,
**caractérisé en ce que**
lesdites branches conductrices (23a, 23b) agencées de manière hélicoïdale présentent chacune un pas h qui est supérieur au produit de la longueur axiale l de la branche conductrice hélicoïdale (13j) par le nombre p de pôles.

2. Stator (3) selon la revendication 1,
- dans lequel l'enroulement statorique (4) présente des conducteurs de connexion (19) électriquement conducteurs dans les zones d'extrémité axiales (17) entre les premières branches conductrices (23a) et les secondes branches conductrices (23b),
- et dans lequel lesdits conducteurs de connexion (19) présentent à la fois une composante directionnelle radiale et une composante directionnelle circonférentielle.

3. Stator (3) selon la revendication 2,
- dans lequel les conducteurs de connexion (19) électriquement conducteurs sont conçus de manière à obtenir au moins un agencement de bobines supérieur (21) pour chaque phase (u, v, w).

4. Stator (3) selon l'une des revendications 1 à 3, dans lequel l'enroulement statorique (4) présente un nombre i de spires conductrices (13j), dans lequel i est soit le produit du nombre p de pôles par le nombre n de phases, soit la moitié du produit du nombre p de pôles par le nombre n de phases.

5. Stator (3) selon la revendication 4,
- dans lequel chacune des i spires conductrices présente une première branche conductrice (23a) et une seconde branche conductrice (23b)
- et dans lequel le pas h est choisi de manière à ce que les branches conductrices respectives (23a, 23b) tournent de manière hélicoïdale d'un angle α sur leur longueur axiale l,
dans lequel α présente une valeur qui est au moins égale à α = 360°/p - 2^{∗}360°/i et est inférieure à α = 360°/p.

6. Stator (3) selon l'une des revendications précédentes,
- dans lequel les premières branches conductrices (23a) des spires conductrices individuelles (13j) sont agencées sur une surface d'enveloppe cylindrique intérieure commune (20a),
- et dans lequel les secondes branches (23b) des spires conductrices individuelles (13j) sont agencées sur une surface d'enveloppe cylindrique extérieure commune (20b).

7. Stator (3) selon la revendication 6, dans lequel l'enroulement statorique (4) est réalisé de manière
- à ce que les premières branches conductrices (23a) présentent sur la surface cylindrique intérieure (20a) un premier sens d'enroulement commun
- et à ce que les secondes branches conductrices (23b) présentent sur la surface cylindrique extérieure (20b) un second sens d'enroulement commun
qui est opposé au premier sens d'enroulement.

8. Stator (3) selon l'une des revendications 1 à 7, dans lequel le nombre n de phases (u1, u2, u3, v1, v2, v3, w1, w2, w3) est supérieur à trois, notamment un multiple entier de trois.

9. Stator (3) selon l'une des revendications 1 à 8, dans lequel l'enroulement statorique (4) est réalisé sous la forme d'un enroulement à entrefer.

10. Moteur électrique (1) muni d'un stator (3) selon l'une des revendications 1 à 9.

11. Moteur électrique (1) selon la revendication 10, présentant en outre un rotor (7) qui est conçu pour générer un champ magnétique à p pôles.

12. Moteur électrique (1) selon la revendication 11, dans lequel le rotor (7) est muni d'au moins un enroulement d'excitation supraconducteur (8).

13. Moteur électrique (1) selon l'une des revendications 10 à 12, présentant au moins un convertisseur destiné à générer et/ou à annuler un déphasage entre les courants circulant dans les phases individuelles de l'enroulement statorique (4).

14. Moteur électrique (1) selon l'une des revendications 10 à 13, dans lequel le nombre p de pôles magnétiques se situe entre 2 et 12, et est notamment égal à 8.

15. Moteur électrique (1) selon l'une des revendications 10 à 14, qui est réalisé sous la forme d'un générateur ou d'un moteur d'entraînement pour aéronef.
